# EUROPÄISCHE PATENTSCHRIFT

(11) **EP 2 209 744 B1**
(45) Veröffentlichungstag und Bekanntmachung des Hinweises auf die Patenterteilung: **05.09.2012**
(21) Anmeldenummer: 08846953.1
(22) Anmeldetag: 10.11.2008
(51) Int. Cl.: C02F 1/42, B01J 47/00

(54) **TRANSPORTABLES GERÄT ZUM AUFBEREITEN VON WASSER**
PORTABLE DEVICE FOR TREATING WATER
APPAREIL TRANSPORTABLE DE TRAITEMENT D'EAU

(30) Priorität: 09.11.2007 DE 102007053867; 12.06.2008 DE 102008028051
(43) Veröffentlichungstag der Anmeldung: 28.07.2010
(73) Patentinhaber: Hannemann, Mike, 85570 Markt Schwaben (DE)
(72) Erfinder: Hannemann, Mike, 85570 Markt Schwaben (DE)
(86) Internationale Anmeldenummer: PCT/DE2008/001842
(87) Internationale Veröffentlichungsnummer: WO 2009/059600

(56) Entgegenhaltungen:
- EP-A- 1 253 114
- WO-A-2008/064708
- DE-A1-102006 024 868
- DE-U1- 9 415 698
- DE-U1- 29 905 141
- ENDE D: "Heizungswasseraufbereitung. Kalk- und Korrosionsschutz nach VDI 2035." FACH.JOURNAL 2006 / 2007, [Online] 18. Oktober 2007 (2007-10-18), Seiten 210-211, XP002527362 Gefunden im Internet: URL:http://www.ihks-fachjournal.de/files/F J_PDF/2006_2007/Heizungswasseraufbereitung .pdf> [gefunden am 2009-05-11] -& [Online] XP002527363 Gefunden im Internet: URL:http://www.ihks-fachjournal.de/files/F J_PDF/2006_2007/Heizungswasseraufbereitung .pdf> [gefunden am 2009-05-11]

## Beschreibung

Die Erfindung bezieht sich auf ein Gerät zum Behandeln von Heizungswasser nach dem Oberbegriff des Anspruchs 1.

Solcherart Aufbereitungsgeräte oder -Anlagen haben insbesondere den Zweck, Trinkwasser zu enthärten oder deren Härte zu verringern, um entsprechenden Anforderungen in Industrie, Gastronomie, Wäschereien, Arztpraxen usw. gerecht zu werden.

Dabei besteht eine solche Anlage prinzipiell aus einem relativ großen Drucktank oder Druckbehälter, gefüllt mit einem Ionenaustauschermittel (-harz), der über seine Armaturen fest in dem Trinkwasserkreislauf eingekoppelt ist. Diesem Druckbehälter ist ein Salzbehälter zugeordnet bzw. mit diesem verbunden, mit Hilfe dessen nach einer bestimmten Funktionsdauer eine Regeneration oder Austausch des Ionenaustauschmittels vorgenommen wird. Beide Geräte bzw. Tanks sind stationär vorgesehen, stehen also unbewegt nebeneinander oder sind zu einem stationären Aggregat zusammengefasst.

Wasserbehandlungsgeräte gemäß dem Oberbegriff des Anspruch 1 sind unter anderem aus EP 1 253 114A, DE 299 05 141 U1, ENDE, D. "Heizungswasseraufbereitung. Kalk- und Korrosionsschutz nach VDI 2035.", Fachjournal 2006/2007, (Online) 18. Oktober 2007 (2007-10-18), Seiten 210-211, DE 94 15 698 U, DE 10 2005 036 356 A1, WO 02/085 494 A1, US 2004 00 99 594 A1, DE 10 2006 024 868 A1, EP 1253 114 A2 und DE 299 05 141 U1 bekannt.

Aus der DE 20 2004 008 670 U1 (des Anmelders der vorliegenden Anmeldung) ist eine zumindest teilweise mobile Enthärtungsanlage zum Spülen und Befüllen von Kühl- und Heizkreisläüfen bekannt. Diese zeichnet sich durch hohe Kapazitäten aus, d. h. sie kann größere Mengen an kalkfreiem Wasser auf einmal produzieren. Aufwendig wird es jedoch, wenn es um die Befüllung von kleinvolumigen Anlagen geht. Insbesondere dann, wenn die zu befüllende Anlage sich in einem Gebäude älterer Bauweise (Altbauten) und/oder z. B. einer Wohnung im 5. Stock befindet und der Handwerker mit dieser mobilen Heizungswasserfüllanlage die Treppen stufenweise hochfahren und dabei das Gerät jeweils entsprechend hochziehen muss. Ein solches Gerät wiegt ca. 40 kg, wodurch dessen Einsatz sich sehr aufwendig und beschwerlich gestalten kann. Obwohl durch die Anordnung auf einem Fahrgestell ähnlich einem Sackkarren eine vorteilhafte Mobilität gegeben ist, muß mit solch einem Gerät zur Befüllung z. B. einer Etagen-Heizungsanlage, in die Wohnung hinein gefahren werden, so daß es zur Beschmutzung des Bodens und eventuellen Auslegeware kommen kann.

Aus dieser Situation heraus bieten einige Hersteller (siehe unter www.permatrade.de, die "permasoft" Entmineralisierungs-Patronen) relativ kleine Flaschen-Drucktankbehälter an, im weitesten Sinne ähnlich mit Gasflaschen, bei denen Ein- und Ausgangsarmaturen einfacher Bauart oben am Flaschenkopf an-/einschraubbar sind. Hierbei muß bei Erschöpfung das Harz ausgetauscht werden, wofür mühsam der Ventilkopf abgeschraubt, das Harz mit dem darin befindlichen Restwasser in einen Eimer/Behälter entleert, dann aus z. B. einem 25 kg-Sack sehr feinperlige Ionenaustauscherharze entnommen und in den nun leeren Drucktankbehälter eingefüllt und schließlich der Ventilkopf wieder angeschraubt werden muß. Dies ist insgesamt eine relativ mühsame und unsaubere Tätigkeit, die oft unter sehr unwirtlichen Bedingungen auszuführen ist. Ein ähnliches Gerät der gleichen Firma ist in der DE 10 2005 036 356 A1 beschrieben; wobei der mit Ionenaustauscher für befüllte und mit Zu- und Ablaufstutzen und Anschlusskupplungen versehene Behälter grundsätzlich als "Einwegpatrone" angepriesen wird, also als (teurer) Wegwerfartikel.

Es besteht die Möglichkeit, diese Flaschen-Drucktankbehälter an eine dazu kaufbare Regenerierstation anzuschließen und zu regenerieren, was jedoch mit entsprechend hohen Anschaffungskosten verbunden ist.

Es besteht aber auch die Möglichkeit, diese Flaschen oder Drucktanks an den Hersteller oder Vertreiber zurückzusenden und im Austausch eine neue oder regenerierte Flasche zu erhalten, in Art eines Wechselsystems. Dies bedeutet aber für den Handwerker ein entsprechend hoher Aufwand an Logistik und relativ geringe Flexibilität bzw. hohe Abhängigkeit vom Zulieferer.

Auch ist bekannt (siehe unter www.judo-online.de und/oder www.perma-trade.de ) diese relativ kleinen, aber doch noch verhältnismäßig schweren Flaschen-Druckbehälter mobil mitzuführen, wobei diese in einem einfachen, aber durch die Größe der Flasche recht voluminösen Koffer eingelegt sind bzw. eingelegt werden können, nebst notwendigem bzw. entsprechendem Zubehör wie Schläuche, Armaturen und Werkzeug; oder es werden im Koffer nur die Zubehör-Teile mitgeführt, die hierfür zu großen Flaschen separat mitgetragen. Bei Bedarf werden die Einzelteile dem Koffer-Behälter entnommen und außerhalb des Koffers zusammengestellt (Armaturen an Flansche angeschraubt und Schläuche befestigt), was aber relativ zeitaufwendig ist und eher an Tüftler als an einen kompetenten Fachmann erinnert. Hinzu kommt, dass diese Systeme relativ schwer sind, im Bereich 20 bis 25 kg.

Aufgabe der Erfindung ist es somit, ein Gerät oben genannter Gattung anzugeben, das in einfacher Weise für eine Bedienperson transportierbar ist.

Diese Aufgabe wird durch das erfindungsgemäße Gerät mit den Merkmalen des Anspruchs 1 gelöst. Vorteilhafte Weiterbildungen sind in den Unteransprüchen gekennzeichnet.

Demgemäß besteht das Gerät aus einem besonderen Druckbehälter, der in Art und Größe ähnlich einem handelsüblichen Wasser-Filtergehäuse ist, in dem statt des üblichen Filtereinsatzes nunmehr ein Ionenaustausch-Modul in Form einer mit Ionenaustauschermittel befüllbaren zylindrischen Patrone schnell austauschbar eingesetzt ist. Dabei hat sich als optimal erwiesen, wenn als Enthärterpatrone ein Zylindergehäuse verwendet wird, das in seinen Abmessungen denen des Filtergehäuses entspricht und z. B. einen Durchmesser von 80 mm bis 150 mm, vorzugsweise 110 mm und eine Höhe von 200 mm bis 300 mm, vorzugsweise 250 mm besitzt. Je nach Einsatzgebiet kann nun diese zur Verfügung stehende leere Patrone mit unterschiedlichen Ionenaustauschermitteln, wie Hochleistungsharz oder einer beliebigen Mischung einschlägiger Mittel gefüllt werden. Die Patrone ist in dieser Befüllung zudem regenerierbar, ohne dass die Befüllung nach Kapazitätserschöpfung auszutauschen ist, also die Patrone zu entleeren und das entleerte Material durch neues aktives Mittel zu ersetzen wäre.

Das erfindungsgemäße Gerät lässt sich relativ klein, handlich, leicht, kompakt und sicher ausgestalten, es ist einfach aufgebaut und handhabbar; es ist wirtschaftlich sowie geeignet zum Spülen und Befüllen von kleinvolumigen Heiz- und Kühlkreisläufen mit enthärtetem Wasser und zudem leicht von Hand mitführbar/tragbar, mit einem geringen Gesamtgewicht von max. 12 kg.

So kann durch die Verwendung unterschiedlichster Harze oder Harzmischungen und/oder Mischungen mit anderen Filtermedien voll- oder teilentsalztes Wasser, Weichwasser oder speziell gefiltertes (Trink-)Wasser hergestellt werden. Es können somit gezielt unerwünschte Inhalte des Wassers (oder anderer Flüssigkeiten), wie Kalk, Salze und/oder diverse Verunreinigungen entfernt werden, um optimales Brauch- oder gar Trinkwasser zu erhalten.

Es wird hier vorzugsweise von einem Enthärtungsgerät gesprochen, es ist jedoch ganz speziell ein Gerät das Enthärten, Entsalzen und sogar Entkeimen kann.

Die üblichen Zu- und Abführleitungen, mit denen üblicherweise ein Enthärtungsgerät an einen zu enthärtenden oder zu entmineralisierenden Trinkwasser- oder Brauchwasserkreislauf anzuschließen ist, können direkt am (Filter-)Gehäuse des Druckbehälters angebracht werden bzw. über am Gehäuse angebrachte oder anbringbare Zu- und Ablaufstutzen. Die Anbringung der Zu- und Abführleitungen kann aber auch über zwischen dem Filtergehäuse oder dessen Zu- und Ablaufstutzen zwischengesetzte Zu- und Ablaufarmaturen erfolgen, über die einerseits eine Druckbegrenzung und Systemdruckvoreinstellung und andererseits eine Durchlaufmessung (Wasserzähler), bei jeweiliger Absperrung über entsprechende Ventile, vornehmbar ist.

Sind dann noch die Zu- und Ablaufarmaturen und die Zu- und Abführleitungen als selbstständige und entsprechend mitführbare Modulelemente ausgebildet und an ihren Enden mit Kupplungselementen, vorzugsweise und/oder zumindest teilweise mit Schnellkupplungselementen versehen, dann stellt das erfindungsgemäße transportable Enthärtungsgerät ein einfach mitzuführendes und schnell in Aktion bringbares Systemgerät dar, das am Einsatzort mit wenigen Handgriffen aktivierbar ist. Es muss dann nämlich lediglich der Druckbehälter auf den Boden oder auf einer Unterlage aufgestellt, an dessen entsprechenden Zu- und Ablaufstutzen die Zu- und Ablaufarmaturen angeschraubt oder aufgesteckt werden und an diesen wiederum die Zu- und Abführleitungen bzw. -Schläuche über deren Schnellkupplungen angesteckt oder angekoppelt werden. Danach muss das so zum Einsatz bereitgestellte Enthärtungsgerät nur noch über die freien Enden der Zu- und Ablaufschläuche an die Zu- und Abläufe des zu entmineralisierenden Wasserkreislaufes angeschlossen werden, vorzugsweise ebenfalls über Schnellkupplungselemente.

Es ist somit zu erkennen, dass dieses transportable Enthärtungsgerät in seiner Grundform im weitesten Sinne ähnlich einem in jedem Trinkwasserkreislauf vorhandenen Wasserfilter ist, nur dass hier der Inhalt des Filtergehäuses durch eine mit Hochleistungsharz gefüllte Austauschpatrone ersetzt ist. Zudem ist nicht eine starre Befestigung innerhalb eines Wasser-Zulaufrohres vorhanden, sondern es ist ein schneller, flexibler Schnellkupplungsanschluss an einen solchen Kreislauf vorgesehen. Hierdurch ist ein Gerät zur Verfügung gestellt worden, das äußerst wirtschaftlich und einfachst in Aufbau und Handhabung ist. Außerdem ist zu erkennen, dass durch die einfachen Einzelteile ein relativ leichtgewichtiges System zur Verfügung steht.

Um die Transportierbarkeit des Enthärtungsgerätes insgesamt einfacher und sicherer zu gestalten, ist der Druckbehälter, vorzugsweise zusammen mit zugehörigen Armaturen und Leitungen, in einem tragbaren Behältnis leicht entnehmbar angeordnet. Das tragbare Behältnis gemâß vorliegender Erfindung ist ein Tragegehäuse, das in Art eines so genannten Schalenkoffers, wie allgemein als Reisegepäck verwendbar, ausgebildet ist, mit einem Bodenteil, in dem Vorzugsweise die mitgeführten Gegenstände eingelegt werden oder sind und einem Deckelteil, das z. B. über Scharniere verschwenkbar am Bodenteil angebracht ist. Dabei sind die beiden Gehäuseteile über z. B. Schnappverschlüsse in geschlossenem Zustand miteinander verriegelbar. Das Tragegehäuse kann aus unzerbrechlichem Kunststoff oder aus Metall gefertigt sein oder einer Kombination unterschiedlicher Materialien, z. B. in Tiefziehverfahren. Erfindungsgemäß ist der Druckbehälter über an dessen Filtergehäuse angebrachte Zu- und Ablaufstutzen an Kupplungs- bzw. Anschlusselementen, wie Anschlussgewindestutzen, die in vorzugsweise gegenüberliegenden Schmalseiten des Bodenteiles des Tragegehäuses vorgesehen sind, leicht an- bzw. abkoppelbar ortsfest im Tragegehäuse eingesetzt. Ist dann noch das Tragegehäuse oder zusätzliche Innenteile des Tragegehäuses an die äußere Form des Filtergehäuses angepasst, dieses entsprechend außenseitig abstützend, gepaart mit entsprechenden Befestigungsmitteln, wie Federschellen und/oder Haltebändern, dann ist ein sicherer Transport und sicheres Handhaben des Gesamtgerätes möglich, ohne befürchten zu müssen, dass bei Auflegen oder Aufstellen des Tragegehäuses flach oder hochkant oder bei dessen Umkippen, die im Tragegehäuse befindlichen Teile beschädigt werden.

Von Vorteil ist, wenn das Tragegehäuse einen zur Flachbasis seines Bodenteiles parallel beabstandeten Zwischenboden besitzt, in dem Steckkupplungen für die Zu- und Ablaufstutzen des Druckbehälters vorhanden sind. Dabei sind diese Steckkupplungen über im Zwischenraum zwischen den beiden Böden geführten Verbindungsleitungen mit den an den schmalseitigen Wänden vorhandenen Anschluss-Gewindestutzen verbunden oder stehen mit diesen in Verbindung. Die am Druckbehälter bzw. am Filtergehäuse angebrachten Zu- und Ablaufstutzen sind dabei jeweils L-förmig abgewinkelt ausgebildet und zwar so, dass jeweils der eine, meist kürzere L-Arm am Gehäusekopf angeschraubt ist, während die beiden längeren Arme parallel zueinander und gleichzeitig senkrecht zur Mittelachse des Gehäuses abstehen. Wenn dabei diese Stutzen mit ihren Enden, an denen sich Steckkupplungsteile befinden, über den Gehäuse-Umfang so weit (oder nur so weit) herausreichen, dass ein sicheres Einrasten oder Einstecken in die im Zwischenboden befindlichen Steckkupplungsteile erfolgt, dann liegt das Filtergehäuse auf dem Zwischenboden auch über sein Gehäuse abgestützt auf. Selbstverständlich kann der Zwischenboden entsprechend der Außen-Mantelform des Filtergehäuses ein- bzw. ausgeformt sein, so dass ein insgesamt niedrigerer Aufbau und eine noch sicherere Abstützung erreicht werden kann.
Dabei kann ein Ringschlüssel, mit dem der Kopf des Filtergehäuses von dessen Körper zum Austausch der darin befindlichen Filterpatrone auf- und zugeschraubt wird, in einer entsprechenden Vertiefung im Zwischenboden, unter dem Filtergehäuse auf diesem aufliegend, sicher und stets einsatzbereit aufbewahrt mitgeführt werden.

Von Vorteil ist es weiterhin, wenn die Zu- und Ablaufarmaturen, die schnell und einfach außen am Tragegehäuse über die entsprechenden Anschluss-Gewindestutzen anschließbar und abnehmbar sind, bei Nichtgebrauch, also bei für den Transport in dem Tragegehäuse abgenommen aufbewahrten Zustand, in auf dem Zwischenboden angeordneten Schnellbefestigungselementen wie Federschellen, schnell entnehmbar und sicher festgehalten werden. Hierfür können z. B. links und rechts des an dem Zwischenboden bereits angekoppelten Druckbehälters jeweils zwei Federschellen je Armatur vorgesehen sein, und die Befestigung der Armaturen somit durch einfaches Eindrücken zwischen die Federarme der Federschellen erfolgen. Es sind dann alle empfindlicheren Teile des Enthärtungsgeräts sicher im praktisch unzerbrechlichen Tragegehäuse, insbesondere bei Nichtgebrauch und Transport, gegen Beschädigung gesichert.

Selbstverständlich kann das Tragegehäuse so groß ausgelegt sein, dass auch die Zu- und Abführleitungen darin Aufnahme finden können. Da diese Schlauchleitungen mit Ihren endseitigen Kupplungselementen jedoch relativ voluminös sein können und bedarfsweise Schlauchleitungen unterschiedlicher Länge mitzuführen sind, würde die Aufnahme dieser Schlauchleitungen innerhalb des Tragegehäuses das Volumen des Tragegehäuses und damit das Traggewicht des Gesamtgerätes unnötig vergrößern. Daher ist es von Vorteil, wenn das Schlauchset außerhalb des Gehäuses, vorzugsweise an dessen Deckeloberseite, z. B. über eine leicht zu öffnende und verschließbare Schlaufe oder Ähnlichem, in ringförmig zusammengerolltem Zustand befestigbar ist. Wird nun das Tragegehäuse z. B. über den in seiner oberen Schmalseite befindlichen Tragegriff angehoben und getragen mitgeführt, dann hängt das Schlauchset an der zur tragenden Person nach außen weisenden Tragegehäuseseite und stellt keine weitere Behinderung bei dessen Handhabung und Transport dar. Auch ist dadurch ein kürzeres Schlauchset schnell und einfach durch ein längeres Schlauchset austauschbar, ohne dass Verstauungsprobleme zu befürchten sind.

Um eventuell in das Tragegehäuse über die inneren Anschlusselemente ausgetretenes Wasser bedarfsweise abzulassen, ist an der unteren Schmal- bzw. Standseite des Tragegehäuses ein Ablass vorgesehen, z. B. in Form eines verschließbaren Gewindestutzens.

Von Vorteil ist, wenn die Austauschpatronen als Gebinde von mind. zwei, vorzugsweise vier oder sechs Patronen zur Verfügung gestellt werden, vorzugsweise in robusten Kisten oder Kartons, so dass ein umweltfreundliches Mehrwegsystem geschaffen wird. Die Ersatzpatronen können somit im Sechserpack in einer Mehrweg-Box geliefert werden, wodurch sich ca. 3.000 Liter Weichwasser produzieren lassen. Die verbrauchten Patronen können z. B. in der Patronenbox in einem Pfandsystem über den lagerführenden Handel ausgetauscht werden.

Die Austauschpatronen des Enthärtungsgeräts können in vorteilhafter Weise in einer stationären oder mobilen Regenerationsanlage erneuert bzw. regeneriert werden. Eine solche Anlage besitzt mehrere zueinander parallel geschaltete Filtergehäuse, die den Filtergehäusen des Druckbehälters des Enthärtungsgerätes gleichen und die mit der Regenerationsflüssigkeit wie Salzwasser/Sole parallel angeströmt sind. Nach erfolgtem Regenerieren, also ausreichendem Durchströmen mit Regenerationsflüssigkeit, werden die Patronen, noch in den Filtergehäusen der Regenerationsanlage befindlich, mit klarem Wasser durchgespült, um Salz-Restbestände zu vermeiden, die ansonsten beim Enthärten in den Wasserkreislauf eingespült würden. Nach abgeschlossener Regeneration und Durchspülung werden die Patronen aus den Filtergehäusen der Regenerationsanlage entnommen, erneut in die entsprechenden Patronenboxen eingesetzt und zum Einsatzort gebracht bzw. dem lagerführenden Handel zur Verfügung gestellt.

Die Regenerationsanlage kann so ausgeführt sein, dass sie ein Gestell besitzt, welches das Format einer kleinen Anrichte aufweisen kann, mit Abmaßen z. B. von ca. L 1 m x T 0,40 m x H 1,40 m, in der sämtliche Anlagenteile bzw. Geräte in entsprechender Anordnung aufgenommen sind. Die Anlage kann stationär oder mobil ausgeführt sein, je nach Größe und/oder Einsatzort. Sie kann zudem eine Auffangwanne besitzen, in der die verbrauchten Flüssigkeiten Aufnahme finden.

Zusammenfassend ist nochmals auszuführen, daß erfindungsgemäß ein tragbares Enthärtungsgerät (-anlage) geschaffen wurde, zum Spülen und Befüllen von kleinvolumigen Heiz- und Kühlkreisläufen mit kalkfreiem bzw. enthärtetem Wasser (als Koffer gefüllt bis ca. 440mm Höhe, 350mm Breite und 250mm Tiefe), mit dem notfalls aber auch Trinkwasser aufbereitbar oder reinigbar ist.
Es ist geprägt durch ein optisch positiv kompakt-geschlossenes Bild, in Form eines kompakten Trage-Behälters bzw. -Gehäuses z. B. aus unzerbrechlichem Kunststoff in individuell ausgebildeter tiefgezogener spezieller Form. Das Gerät ist dabei in Art eines Koffers oder Koffer-Trolleys mitführbar, oder wie eine Umhängetasche, oder ein Rücksack, wofür dann entsprechende Griffe, Zugrahmen, Räder, Laschen und/oder Gurte am Gehäuse befestigbar sind. Bei (Koffer-) Tragposition (Tragegriff oben) aufgestelltem Zustand sind unten, in Nähe des Stell-Bodens des Tragegehäuses schmalseitig rechts und links Zu- und Ablaufstutzen eingelassen angebracht bzw. Gewindeöffnungen. Das Tragegehäuse lässt sich wie ein Koffer öffnen und mit Schnappverschlüssen verschließen. Im Behälter befindet sich ein filterähnliches Gehäuse (Filtergehäuse) und in diesem eine austauschbare Filter-Patrone, befüllt mit einem Hochleistungsionenaustauscher zum Enthärten, und/oder Entsalzen des Filterwassers, die gemeinsam einen Druckbehälter bilden. Das Gehäuse des Filters ist mit abgewinkelten parallelen Zulauf- und Ablaufstutzen versehen, an deren Enden Steckanschlüsse vorhanden sind, welche im Boden oder einem Zwischenboden des Tragegehäuses in passende Steckkupplungen einrastbar sind. Im Tragegehäuse sind ebenfalls mittels Federschellen die als selbständige ModulElemente ausgebildeten Zulauf- und Ablaufarmaturen am Zwischenboden festgeklemmt, so dass sie leicht entnommen und an den entsprechenden Ein- bzw. Ausgängen in der (Tragegehäuse-) Wand angeschraubt werden können.
Bei Inbetriebnahme des Gerätes wird der geschlossene Behälter aufrecht hingestellt (kann aber auch liebend betrieben werden) und das Wasser fließt über die Zulaufarmatur und die Wasserzuführungen in den Eingang des Filtergehäuses mit innenliegender Ionenaustauscherpatrone. Über den Ablaufstutzen wird dann das enthärtete Wasser zur Ablaufarmatur geleitet, wo eine weiterführende Verbindung zum entsprechend zu befüllenden System angebracht wird. Am Ende der Anwendung wird die Zulauf- und Ablaufarmatur wieder abgenommen, innen an den Federschellen arretiert, der Deckel verschlossen und das Gerät wie ein Koffer wieder aufgenommen und weggetragen.
Über den an der Ablaufarmatur integrierten Wasserzähler ermittelt der Anwender in gewohnter Weise die durchgeflossene Wassermenge und damit die vorhandene Kapazität zur Lieferung oder Produktion von weichem Wasser. Ist die Kapazitätsgrenze erreicht, wird das Filtergehäuse an den Steckkupplungen entriegelt und aus dem Behälter entnommen. Ein zum Öffnen des Filtergehäuses (um die erschöpfte Ionenaustauscherpatrone zu entnehmen und eine neue einzusetzen) benötigter, passender Ring-Schlüssel ist ebenfalls im Trage-Behälter eingelegt, vorzugsweise in einer entsprechend eingeformten Vertiefung im Zwischenboden, unterhalb des in diesen eingesteckten Filter-Gehäuses. Nach dem Öffnen und Austausch der Patrone wird das Filter-Gehäuse wieder geschlossen und das Filtergerät bzw. der Druckbehälter wird wieder über die Steckkupplungen arretiert; danach wird der Tragegehäuse-Deckel geschlossen und es kann spätestens nach einer Minute weitergearbeitet werden.

Somit wird ein Heizungsbauer bei kleinen Reparaturarbeiten, Wartungen, Kundendienst, also wenn eine kleine Menge Wasser einer Heizungsanlage abgelassen wurde, diese fehlende Wassermenge nicht aus dem Wasserhahn mit kalkhaltigem Trinkwasser ersetzen müssen, (entsprechend gültigen Normen und Richtlinien), sondern dies erfolgt in einfacher Weise mithilfe des erfindungsgemäßen Geräts und zwar mit entsprechend enthärtetem Wasser. Das Gerät ist somit, abgesehen vom ansprechend ausführbaren Design, kompakter, sicherer und einfacher in der Handhabung als die bekannten einschlägigen Geräte. Es ist zudem äußerst platzsparend und muss nicht komplex zusammengebaut werden, sondern es sind lediglich Zulauf- und Ablaufarmatur anzuschrauben bzw. die Schläuche anzuschließen und los geht's. Das Ionen-Austauschermodul (Filtergehäuse mit Patrone) ist vorzugsweise ein im Handel käuflich erwerbbares, mit einer zylindrischen Patrone mit ca. 110 mm Durchmesser und 250 mm Höhe, kompatibel mit einem im Handel erhältlichen Filtergehäuse, wobei die Patrone wahlweise mit verschiedenen Filtermedien bedarfsweise befüllbar ist.

Die erfindungsgemäß vorgesehene oder vorsehbare stationäre oder mobil gestaltbare Regenerationsanlage für die Ionenaustauschharzpatronen ist zur Bereitstellung eines Kreislaufs so aufgebaut, dass eine Anzahl von Filtergehäusen parallel angeströmt werden, die im Wesentlichen denen des transportablen Enthärtungsgerätes gleichen und in welche die zu regenerierenden Patronen eingesetzt werden. Diese Harzpatronen werden mit Salzwasser durchströmt, wodurch die Calcium- und Magnesiumsalze, die vorher von dem Harz gebunden wurden, wieder gelöst werden und die Harze neu mit Natriumionen aufgeladen werden. Das aus der Patrone und dann aus dem Gehäuse austretende Salzwasser fließt wieder zurück und spült praktisch in mehreren Zyklen durch dieses Gerät, so dass eine sehr effiziente Regeneration des Ionenaustauscherharzes der Patronen stattfindet. Im Kreislauf ist eine Pumpe integriert und treibt diese Durchströmung an, die in sich geschlossen werden kann, aber auch dazu verwendbar ist, z. B. die Sole erst einmal anzusaugen und in Bewegung zu halten und hinterher klares Wasser anzusaugen, mit dem dann diese Gehäuse klargespült werden, weil die Salzsole aus diesen Patronen wieder verdrängt werden muss. Es soll nur die Menge an Natriumionen zurückbleiben, die an dem Harz hängt und alles andere was im Volumen des Behälters ist, wird ausgespült. Das heißt, dass kein Natriumchlorid vorhanden ist, also eine Salzlösung, das ein Risiko wäre, wenn es in die Heizung eingespült würde.
Zum Klarspülen wird auch die Abwasserleitung geöffnet, weil beim Klarspülen die Sole verdrängt und ins Abwasser geleitet werden muß. Zum Schutz, umwelttechnisch usw. oder auch zum Schutz der Räumlichkeiten ist es sinnvoll, optional eine Auffangwanne vorzusehen, in der das Gerätegestell quasi integriert ist. Das Format dieses Gestells ist nicht besonders groß, ungefähr im Format einer kleinen Anrichte, also z. B. ca. von 1 m, Tiefe ca. 0,40 m und Höhe von ca. 1,50 m (jedoch variabel, auch je nach gewünschtem Komfort). Die Anlage kann manuell oder über ein Zeitsteuerungsgerät (elektronische Steuerung) geregelt laufen, um die Zirkulationszeiten und die Spülzeiten automatisch ablaufen zu lassen. Es kann natürlich auch aufwendiger geregelt werden.
Es müssen somit grundsätzlich die Patronen nicht mehr ausgeschüttet, also das Harz entleert und separat die lose Schüttung regeneriert werden, sondern es wird gleich in diesen Patronen das Harz belassen und die Patronen werden für sich - so wie sie sind - regeneriert. Das ist ein großer produktionstechnischer Vorteil und auch eine große Kostenersparnis.
Die Anlage kann sehr autark arbeiten, sie ist ortsungebunden einsetzbar, man kann sie transportieren und an einem anderen Ort aufstellen, z. B. in Servicestationen wo die Patronen regeneriert werden. Die Anlage ist sehr variabel und Platz sparend einsetzbar, benötigt lediglich einen Abwasseranschluss und eine Stromzufuhr. Die Behälter werden dann entsprechend mit Wasser gefüllt, so dass auch eine Unabhängigkeit von Wasserdruckschwankungen oder von Hausinstallationen vorhanden ist.

Vorteilhaft ist schlussendlich, dass diese Anlage auch in kleinen Räumen sehr variabel umhergeschoben werden kann, wenn man sie auf Rollen stellt, d. h. nicht auf feststehende Füße, sondern z. B. ein Gestell mit Rollen, oder Rollen direkt befestigt an der Wanne, vorsieht.
Dann kann diese Anlage auch in Räumlichkeiten bei veränderten logistischen Bedingungen in der Firma an einem anderen Ort platziert oder bei Nichtgebrauch in eine Ecke geschoben werden, so dass sie nicht im Weg steht.

Nachfolgend wird die Erfindung unter Bezug auf die Zeichnung näher beschrieben.
Es zeigen:
- Fig. 1:: eine schematische Ansicht in teilweisem Schnitt eines Enthärtungsgeräts,
- Fig. 2:: eine Schnittansicht ähnlich wie in Fig. 1,
- Fig. 3:: eine schematische Darstellung einer Ablaufarmatur,
- Fig. 4:: eine schematische Darstellung einer Zulaufarmatur,
- Fig. 5:: eine schematische Ansicht durch ein Enthärtungsgerät mit Tragegehäuse und oberen Steckverbindungen,
- Fig. 6:: eine schematische Darstellung eines erfindungsgemäßen Ausführungsbeispiels mit Tragegehäuse, Zwischenboden und unteren Steckverbindungen,
- Fig. 7:: eine Schnitt-Draufsicht auf das Gerät aus Fig. 6,
- Fig. 8:: eine Ansicht wie in Fig. 6, mit den abgenommenen Armaturen eingesetzt auf dem Zwischenboden,
- Fig. 9:: einen Schnitt IX - IX aus Fig. 8, die Befestigungsschellen für die Armaturen veranschaulichend,
- Fig. 10:: eine Vorderansicht eines Enthärtungsgerätes in Transportzustand,
- Fig. 11:: eine Seitenansicht des Gerätes nach Fig. 10,
- Fig. 12:: eine schematische Darstellung einer das Gerät in Art eines Koffers transportierenden Person,
- Fig. 13:: eine schematische Darstellung einer das Gerät in Art einer Umhängetasche transportierenden Person,
- Fig. 14:: eine schematische Darstellung einer das Gerät in Art eines Rucksacks transportierenden Person,
- Fig. 15:: eine Draufsicht eines Geräts in Ausführung als Koffer-Trolley,
- Fig. 16:: eine schematische Perspektivansicht einer Sechser-Box mit Austauschpatronen,
- Fig. 17:: eine schematische Draufsicht auf eine Regenerationsanlage für die Austauschpatronen, und
- Fig. 18:: eine teilweise schematische Seitenansicht der Anlage aus Fig. 17, die parallel geschalteten und durchströmten Filtergehäuse mit darin befindlichen Austauschpatronen darstellend.

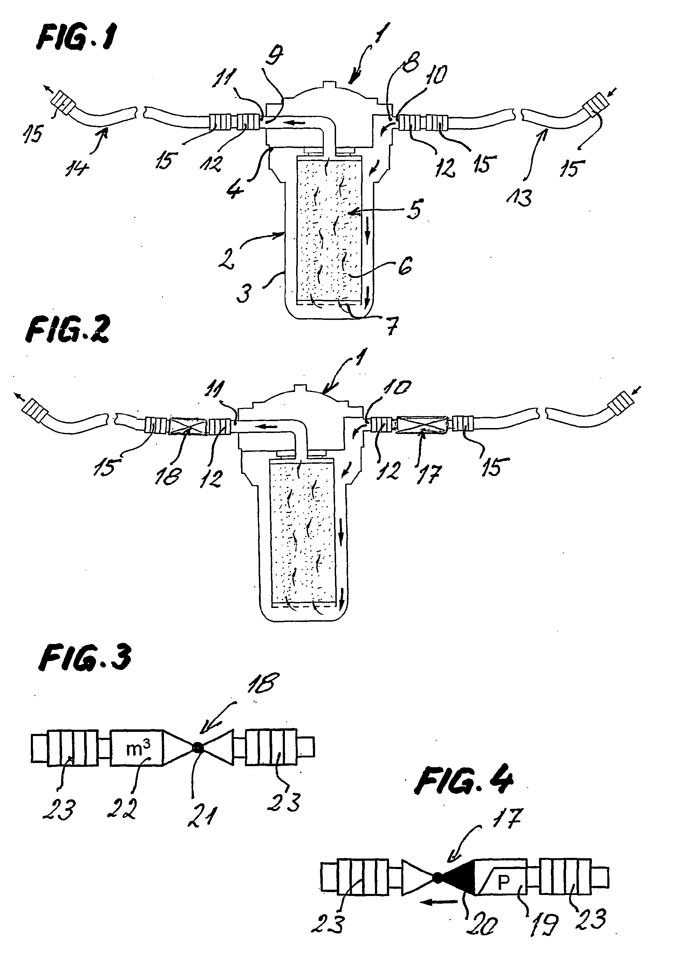

Wie aus **Fig. 1** ersichtlich ist, besteht das transportable Enthärtungsgerät in einfachster, nicht erfindungsgemäßer, Grundausführung aus einem Druckbehälter 1, der aus einem Filtergehäuse 2 besteht, das wiederum aus einem topfförmigen Gehäusekörper 3 und einem Deckel 4 besteht. In dem Filtergehäuse 2 ist eine Patrone 5 angeordnet, die in ihrem Inneren mit Ionenaustauschermittel 6 gefüllt ist. Die Patrone 6 ist an ihrer Unterseite mit Durchbrüchen 7 versehen, so dass über den Zulauf 8 in das Filtergehäuse eintretendes Wasser in axialer Richtung, also von unten nach oben durch die Patrone und deren Füllung hindurch tritt und an deren oberen Ende über entsprechende abgedichtete Leitung durch einen Ablauf 9 wieder austritt. An Zulauf 8 und Ablauf 9 ist jeweils ein Zulaufstutzen 10 bzw. ein Ablaufstutzen 11 vorgesehen oder befestigt, die wiederum an ihren äußeren Enden mit einer Schnellkupplung 12 ausgerüstet sind. Über diese Schnellkupplungen 12 sind wiederum jeweils eine Zuführleitung 13 bzw. eine Abführleitung 14 über an deren Enden befindliche Schnellkupplungen 15 angeschlossen.

**Fig. 2** zeigt ein transportables Enthärtungsgerät das im Wesentlichen gleich ausgebildet ist wie dasjenige aus Fig. 1, nur dass hier jeweils zwischen den beiden Schnellkupplungen 12 und 15 einerseits eine Zulaufarmatur 17 und andererseits eine Ablaufarmatur 18 zwischengeschlossen ist. Die Zu- und Ablaufarmaturen oder Eingangs- und Ausgangsarmaturen 17 und 18 können behälterseitig auch direkt an den Stutzen 10 bzw. 11 befestigt z. B. angeschraubt sein.

**Fig. 3 und 4** veranschaulichen die Zulaufarmatur 17 und die Ablaufarmatur 18, wobei erkennbar ist, dass die Zulaufarmatur 17 aus einer Füllarmatur mit einem Druckminderer 19, einem Rückschlagventil 20 und einem Absperr-Kugelventil 21 besteht, während die Ablaufarmatur 18 ebenfalls ein Absperr-Kugelventil 21 besitzt sowie einen Wasserzähler 22. Beide Armaturen 17 und 18 besitzen an ihren jeweils im angebauten Zustand äußeren Ende eine Schnellkupplung 23, die mit den Schnellkupplungen 15 der Schlauchleitungen 13 und 14 zusammenwirken. Die in montiertem Zustand innen liegenden Enden der Armaturen 17 und 18 können ebenfalls mit einer Schnellkupplung versehen sein; sie können jedoch auch mit einem Gewindezapfen versehen sein, der direkt in die Zu- bzw. Ablaufstutzen 10 bzw. 11 schnell einschraubbar ist.

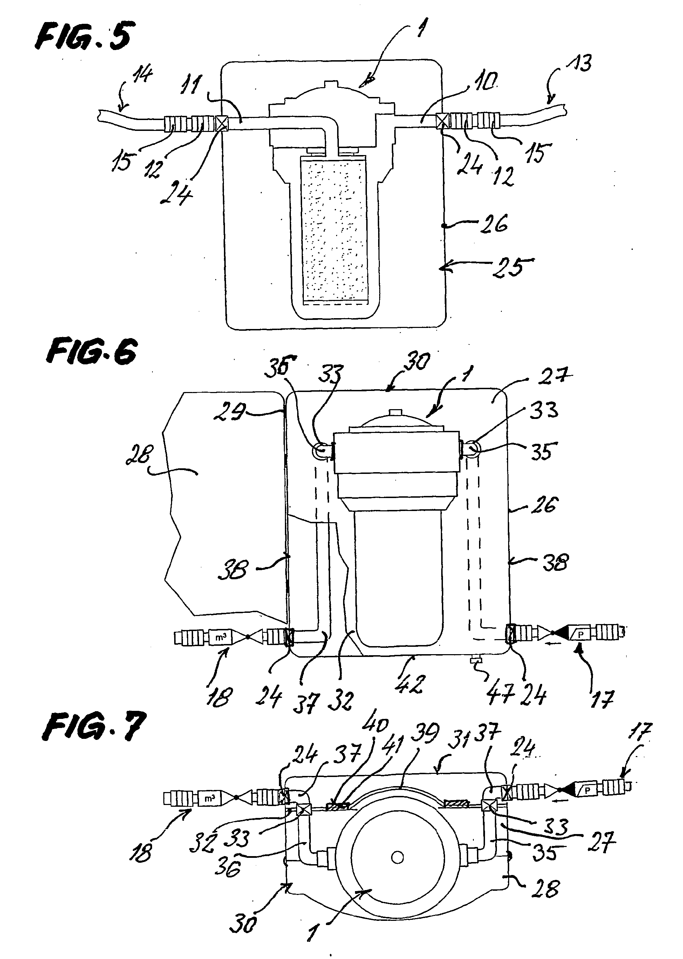

Bei der in **Fig. 5** dargestellten Ausführungsform handelt es sich um die in Fig. 1 dargestellte Variante, nur dass hier die Zu- und Ablaufstutzen 10 bzw. 11 radial verlängert ausgebildet sind und in Kupplungs- bzw. Anschlusselementen wie Anschluss-Gewindestutzen 24 münden bzw. mit diesen verbunden sind. Diese Anschlussstutzen 24 können als Schnellkupplungselemente ausgebildet sein und fest in den Wandungen 26 eines tragbaren Behältnisses 25 vorgesehen bzw. in diesen integriert sein. Auch hier können zudem Schnellkupplungen 12 an den Gewindestutzen vorgesehen sein, die mit Schnellkupplungen 15 der Schlauchleitungen 13 und 14 verbindbar sind.

**Fig. 6 und Fig. 7** zeigen, wie ein Druckbehälter 1 in einem aus einem Bodenteil 27 und einem Deckelteil 28 zusammengesetzten Tragegehäuse angeordnet ist, wobei Bodenteil und Deckelteil über Scharniere 28 schwenk-klappbar miteinander verbunden sind. Im Bodenteil 27 ist ein zu dessen Flach-Bodenwand 31 parallel angeordneter Zwischenboden 32 vorgesehen, der mit quer zueinander beabstandeten Steckkupplungen 33 ausgerüstet ist. Am Druckbehälter 1 sind beidseitig, also an den Zu- und Ablauföffnungen je ein L-förmiger Zu- bzw. Ablaufstutzen 35 bzw. 36 so abgewinkelt befestigt, dass die langen L-Schenkel parallel zueinander und senkrecht zur Mittelachse ausgerichtet sind und deren äußeren Enden jeweils mit den Steckkupplungen 33 zusammenwirkende Kupplungsteile besitzen. Die Steckkupplungen 33 sind jeweils über eine Verbindungsleitung 37 mit einem Kupplungs- bzw. Anschlusselement wie Anschluss-Gewindestutzen 24 verbunden, die in den Schmal-Seitenwänden 38 angeordnet bzw. fest in diesem integriert sind, ähnlich wie anhandder Fig. 5 veranschaulicht. An den Anschluss-Gewindestutzen 24 sind wiederum die Zulaufarmaturen 17 bzw. Ablaufarmaturen 18 einschraubbar oder über Schnellkupplungen befestigt. An der unteren Schmal- bzw. Standseite 42 des Tragegehäuses 30 ist ein Ablass in Form z. B. eines verschließbaren Ablassstutzens 47 vorgesehen. Durch diesen kann in das Tragegehäuse unbeabsichtigt ausgetretenes Wasser bedarfsweise abgelassen bzw. entfernt werden.
Insbesondere aus Fig. 7 ist zu erkennen, wie der Zwischenboden 32 einerseits eine Vertiefung 39 besitzt, um insbesondere für den dicken Oberteil des Filtergehäuses Platz zu schaffen und andererseits eine Ausformung 40 besitzt, zur Aufnahme eines Ringschlüssels 41, der zum Abschrauben des Deckels des Filtergehäuses von dessen Körper benutzbar ist.

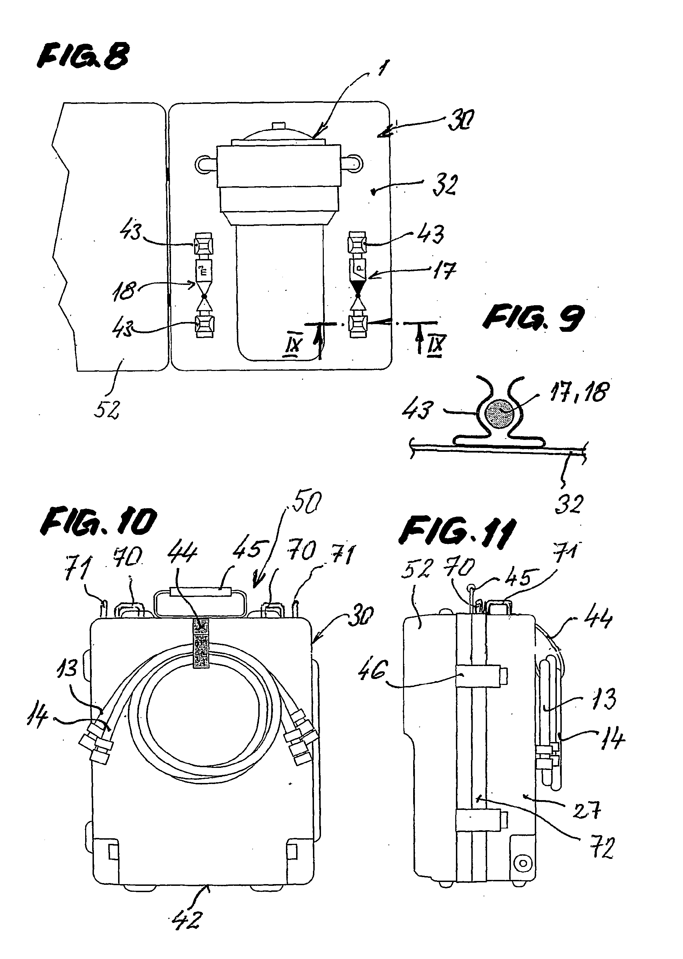

**Fig. 8** zeigt die erfindungsgemäße Ausführungsform nach Fig. 6 und 7, wobei jedoch hier die Zulauf- und Ablaufarmaturen 17 und 18 abgeschraubt und in jeweils zwei am Zwischenboden 32 des Tragegehäuses 30 befestigten Federschellen 34 eingerastet aufbewahrt sind.

In **Fig. 9** ist dargestellt, wie in den Armen der am Zwischenboden 32 befestigten Federschellen 34 die Armaturen 17 bzw. 18 aufgenommen sind.

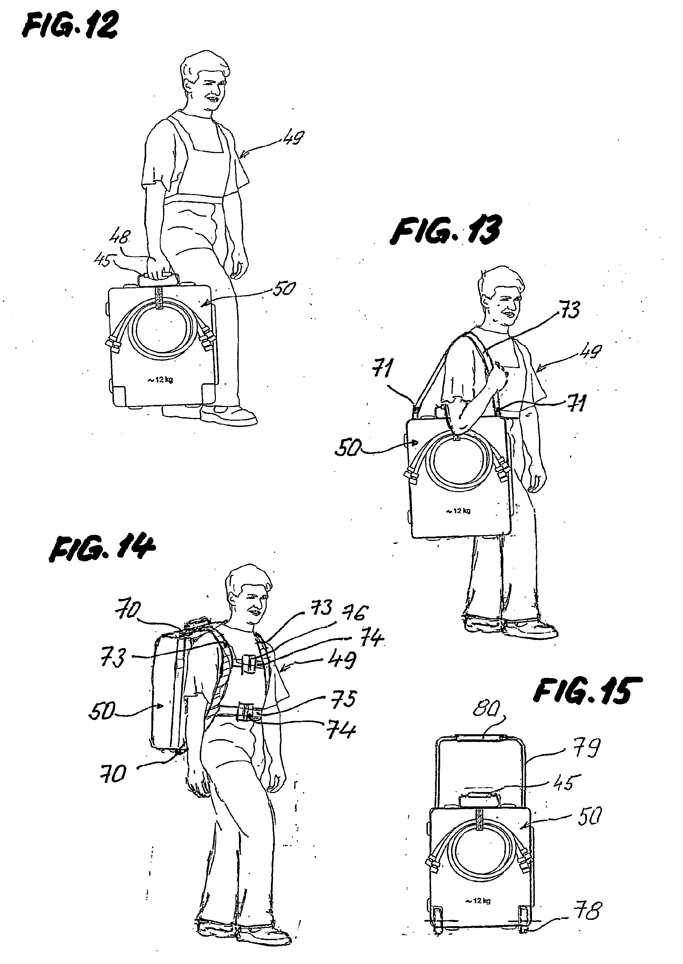

**Fig. 10 und 11** zeigen Außenansichten des Tragbehälters 30 im Transport-Zustand, der an sich auch gleichzeitig der aktive Einsatz-Zustand bzw. -Position ist. Hier sind jedoch für den Transport die Armaturen abgeschraubt und innen eingelegt, wie in Fig. 8 dargestellt, wobei die Zu- und Abführschlauchleitungen 13 und 14 gemeinsam ringförmig zusammengerollt über eine Lasche 44 an der äußeren Oberseite des Tragegehäuses befestigt sind. Auch ist aus Fig. 11 zu erkennen, wie die beiden Tragegehäuse-Teile über Schnappverschlüsse 46 fest miteinander verbindbar sind.
Ein Tragegriff 45 ist an der Oberseite vorgesehen, ähnlich wie bei einem Reisekoffer.
Zudem sind am Bodenteil 27, vorzugsweise an dessen verschlussseitigen (Alu-) Metallrahmen 72 Längslaschen 70 und Querlaschen vorgesehen, an denen (zumindest oberseitig) hier nicht dargestellte Tragegurte befestigbar sind (Fig. 13. und 14). So kann an den Laschen 70 oder 71 ein Gurt mit seinen beiden Enden befestigt sein, so dass das Gerät in Art einer Umhängetasche tragbar ist.
Sind dann noch an der Stellseite, der Bodenseite 27 auch Längslaschen 70 vorhanden (nicht dargestellt), dann können zwei Gurte befestigt werden, so dass das Gerät in Art eines Rucksacks am Rücken getragen werden kann. Selbstverständlich können statt der Laschen 70, 71 Ösen vorgesehen sein, in die Einhänge-Einrichtungen (z. B. Karabiner) an den Gurtenden befestigbar sind.

Das Tragegehäuse 30 mit darin befindlichen Elementen und daran angehängten Schlauchleitungen stellt ein komplettes Enthärtungsgerät 50 dar, in optimalster Ausführungsform.

**Fig. 12** zeigt eine Person 49 die in ihrer Hand 48 ein für den transportablen Einsatz ausgerüstetes komplettes Enthärtungsgerät 50 trägt. Es ist dabei zu erkennen, dass dieses Enthärtungsgerät 50 für die Person nicht beschwerlicher zu tragen ist als ein üblicher Reisekoffer, wobei noch zu beachten ist, das dieses Enthärtungsgerät 50 ein Gesamtgewicht von 12 kg nicht übersteigt.

**Fig. 13** zeigt die gleiche Person 49, die das Enthärtungsgerät 50 in Art einer Umhängetasche trägt. Hierfür hat sie einen (Schulter-) Gurt 73 mit dessen beiden Enden an den Laschen 71 befestigt.

Die gleiche Person 49 trägt in **Fig. 14** das Gerät 50 in Art eines Rucksacks am Rücken. Hierfür hat sie zwei Schultergurte 73 mit ihren Enden an den Laschen 70 jeweils oben und unten befestigt. Zudem ist zum sicheren Tragen ein Brustgurt 74 und ein Bauchgurt 74 vorgesehen, die beide über hierfür bekannte Schnellverschlüsse 76 schnell und einfach geöffnet oder geschlossen werden können.

**Fig. 15** zeigt sechs Patronen 5, angeordnet in einer Patronenbox 51, die mit einem Deckel 52 verschließbar ist.

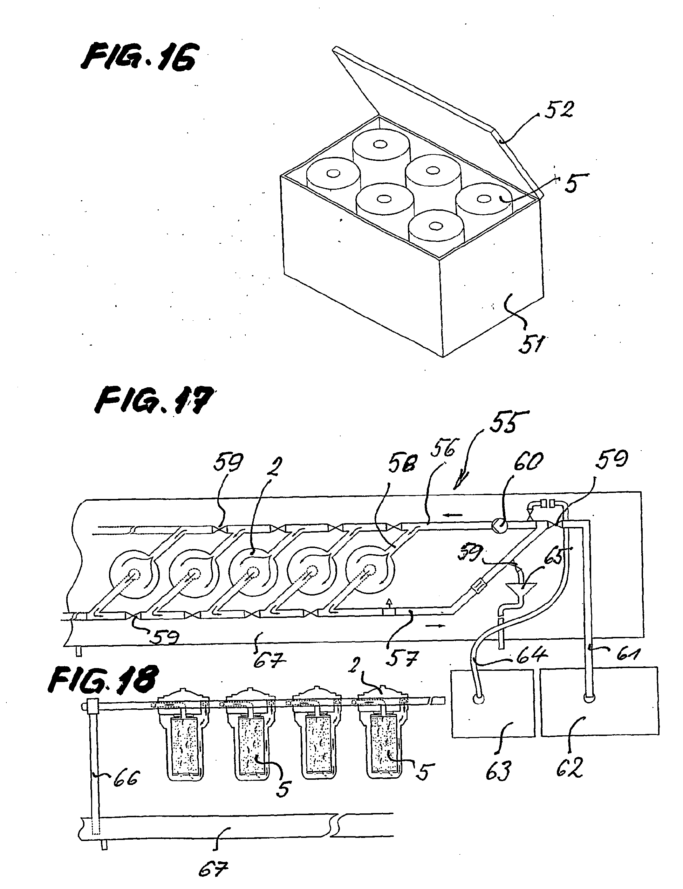

**Fig. 16** veranschaulicht wie das Enthärtungsgerät 50 an seiner unteren Schmalseite mit Rädern 78 versehen ist, während an seiner Oberseite in U-förmiger Zugrahmen 79 mit mittigem Haltegriff 80 ausziehbar vorhanden ist. Beides selbstverständlich nahe der Rückwand, um wie ein üblicher Trolley-Koffer in gekipptem Zustand gezogen werden zu können. Bei einem Gesamtgewicht in doppelt so hoher Ausführung und Kapazität von ca. 20 kg.

**Fig. 17 und 18** zeigen schließlich eine Regenerationsanlage 55 für erschöpfte Enthärtungspatronen des Enthärtungsgeräts, die aus einer Vorlaufleitung 56 und einer dazu parallelen Rücklaufleitung 57 besteht, zwischen denen Verbindungsleitungen 58 mit je einem Filtergehäuse 2 vorgesehen sind. Die Filtergehäuse 2 sind praktisch identisch mit denjenigen des Enthärtungsgerätes selbst, und sind hier in Parallelschaltung angeordnet. In den Vor- und Rücklaufleitungen 56, 57 sind jeweils zwischen den Verbindungsleitungen 58 Ventile 59 vorgesehen, über welche die bedarfsweise Anzahl an Filtergehäusen 2 im Regenerationskreislauf eingebunden werden kann. Es werden somit nur so viele Filtergehäuse gespeist, wie für die Regenerierung vorhandene Patronen notwendig sind, gerechnet von der Pumpe 60 an, die an der Vorlaufleitung 56 eingebunden ist. Die Vorlaufleitung 56 ist über ein Absperrventil 59 und eine Leitung 61 mit einem (Sole-) Behälter 62 für eine erste Lösung, z. B. eine Salzlösung/Sole verbunden. Zudem ist ein Wasserbehälter 63 vorgesehen, aus dem über eine Zulaufleitung 64 und ein (Absperr-) Ventil 59 eine zweite Lösung in die Zulaufleitung 56 eingebracht werden kann. An der Rücklaufleitung 57 ist über ein Absperrventil 59 eine Abwasserleitung 65 angeschlossen, über die verbrauchte Sole oder verschmutztes Spülwasser aus dem Kreislauf entfernt wird. Ein Durchflußmesser dient der Kontrolle der Durchströmung der jeweiligen Flüssigkeiten, somit des Durchlaufs im gesamten System. Das gesamte Leitungssystem der Anlage nebst Gehäusen ist in einem Gestell 66 angeordnet, an dessen Unterseite sich eine Auffangwanne 67 für das abgelaufene Spül- und Salzwasser befindet.

### Bezugszeichenliste

- 1.: Druckbehälter
- 2.: Filtergehäuse
- 3.: Filterkörper
- 4.: Filterdeckel
- 5.: Patrone
- 6.: Ionenaustauschermittel (Harz)
- 7.: Durchbrüche
- 8.: Zulauf
- 9.: Ablauf
- 10.: Zulaufstutzen
- 11.: Ablaufstutzen
- 12.: Schnellkupplung
- 13.: Zuführleitung
- 14.: Abführleitung
- 15.: Schnellkupplung
- 16.: Schnellkupplung
- 17.: Zulaufarmatur
- 18.: Ablaufarmatur
- 19.: Druckminderer
- 20.: Rückschlagventil
- 21.: Absperrventil
- 22.: Wasserzähler
- 23.: Schnellkupplung
- 24.: Anschluss(-Gewinde)stutzen
- 25.: Behältnis
- 26.: Wand
- 27.: Bodenteil
- 28.: Deckelteil
- 29.: Scharnier
- 30.: Tragegehäuse
- 31.: Bodenwand
- 32.: Zwischenboden
- 33.: Steckkupplung
- 34.: ---
- 35.: L-Zulaufstutzen
- 36.: L-Ablaufstutzen
- 37.: Verbindungsleitung
- 38.: Seitenwand
- 39.: Vertiefung
- 40.: Ausformung
- 41.: Ringschlüssel
- 42.: (Schmal-) Standseite
- 43.: Federschelle
- 44.: Lasche
- 45.: Tragegriff
- 46.: Schnappverschluss
- 47.: Ablassstutzen
- 48.: Hand
- 49.: Person
- 50.: Enthärtungsgerät (komplett)
- 51.: Patronen-Box
- 52.: Deckel
- 53.: ---
- 54.: ---
- 55.: Regenerationsanlage
- 56.: Vorlaufleitung
- 57.: Rücklaufleitung
- 58.: Verbindungsleitung
- 59.: Ventile
- 60.: Pumpe
- 61.: Soleleitung
- 62.: Solebehälter
- 63.: Wasserbehälter
- 64.: Wasserzulaufleitung
- 65.: Abwasserleitung
- 66.: Gestell
- 67.: Auffangwanne
- 68.: ---
- 69.: ---
- 70.: Lasche (Längs-)
- 71.: Lasche (Quer-)
- 72.: Rahmen (Alu-)
- 73.: (Schulter-) Gurt
- 74.: (Brust-) Gurt
- 75.: (Bauch-) Gurt
- 76.: Schnellverschluss (Schnalle)
- 77.: -
- 78.: Räder
- 79.: Zugrahmen
- 80.: Haltegriff

## Patentansprüche

1. Gerät zum Behandeln von Heizungswasser, mit
- einem Druckbehälter (1) mit Ionenaustauschermittel (6), und
- am Druckbehälter (1) vorgesehenen Zu- und Ablaufstutzen (35, 36),
**dadurch gekennzeichnet,**
- **dass** der Druckbehälter (1) in Art und Größe ein Wasser-Filtergehäuse (2) ist, in dem statt eines Filtereinsatzes eine das Ionenaustauschermittel (6) enthaltende Patrone (5) austauschbar eingesetzt ist,
- der Druckbehälter (1) in einem tragbaren Behältnis (25) entnehmbar angeordnet ist,
- **dass** das tragbare Behältnis als Tragegehäuse (30) in Art eines Tragekoffers mit Bodenteil (27) und Deckelteil (28) ausgebildet ist, und
- **dass** die am Druckbehälter (1) vorgesehenen Zu- und Ablaufstutzen (35, 36) mit jeweiligen Kupplungselementen (24) verbunden sind, wobei die Kupplungselemente (24) in jeweiligen, gegenüberliegenden Seitenwänden (38) des Tragegehäuses(30) angeordnet sind,
wobei die Zu- und Ablaufstutzen (35, 36) jeweils L-förmig sind, und
wobei der Druckbehälter (1) beidseitig Zu- und Ablauföffnungen aufweist, an die die jeweiligen L-förmigen Zu- und Ablaufstutzen (35, 36) so abgewinkelt befestigt sind, dass die langen L-Schenkel parallel zueinander und senkrecht zu einer Mittelachse des Filtergehäuses (2) ausgerichtet sind und deren äußere Enden jeweils Steckanschlüsse besitzen, die ausgebildet sind, um mit jeweiligen Steckkupplungen (33) zusammenzuwirken.

2. Gerät nach Anspruch 1, **dadurch gekennzeichnet,**
- **dass** Zu- und Abführleitungen (13, 14) mit Schnell-Kupplungselementen (15) an den Enden zum Anschluss an einen Heizungswasserkreislauf vorgesehen sind, die über die Zu- und Ablaufstutzen (35, 36) oder über zwischengesetzte Zu- und Ablaufarmaturen (17, 18) mit dem Wasser-Filtergehäuse (2) über die Kupplungselemente (24) verbindbar sind.

3. Gerät nach Anspruch 2, **dadurch gekennzeichnet,**
- **dass** die Zu- und Ablaufarmaturen (17, 18) und die Zu- und Abführleitungen (13, 14) selbstständige und mitführbare Modulelemente sind, die an ihren Enden mit weiteren Kupplungselementen (23, 15) versehen sind.

4. Gerät nach Anspruch 3, **dadurch gekennzeichnet,**
- **dass** das Bodenteil (27) eine Bodenwand (31) und einen dazu parallelen Zwischenboden (32) besitzt;
- **dass** im Zwischenboden (32) entsprechend dem Abstand zwischen den Enden der Zu- und Ablaufstutzen (35, 36) die Steckkupplungen (33) beabstandet vorgesehen sind, die über im Zwischenraum zwischen Bodenwand (31) und Zwischenboden (32) geführte Verbindungsleitungen (37) mit den Kupplungselementen (24) in den Seitenwänden (38) verbunden sind, und
- **dass** der Druckbehälter (1) so am Zwischenboden (32) aufsteckbar ist, dass er sich in Trage- oder Aktivposition bei geschlossenem Tragegehäuse (30) in einer Hängeposition befindet.

5. Gerät nach Anspruch 4, **dadurch gekennzeichnet,**
- **dass** die Kupplungselemente (24) im Bereich einer unteren Standseite (42) des Tragegehäuses (30) vorgesehen sind, so dass in stehender Gebrauchsposition des Geräts sich angeschlossen Zu- und Ablaufarmaturen (17, 18) nahe dem Boden oder einer Standauflage befinden, und
- **dass** auf dem Zwischenboden (32) Schnellbefestigungselemente wie Federschellen (43) vorgesehen sind, die entnehmbar die Zu- und Ablaufarmaturen (17, 18) aufbewahren, vorzugsweise links und rechts neben dem eingesetzten Druckbehälter (1).

6. Gerät nach einem der vorstehenden Ansprüche 7 bis 9, **dadurch gekennzeichnet,**
- **dass** an der in stehender Gebrauchsstellung des Geräts oberen Seite des Tragegehäuses (30) eine Einhängung (44), wie Lasche (44), Haken oder Band mit Klettverschluss oder Ähnlichem vorgesehen ist, welche die Zu- und Abführleitungen (13, 14) in aufgerolltem oder zusammengelegtem Zustand entnehmbar befestigt.

7. Gerät nach einem der vorstehenden Ansprüche, **dadurch gekennzeichnet,**
- **dass** an der in stehender Gebrauchsstellung des Geräts unteren Seite (42) des Tragegehäuses (30) ein Ablass, insbesondere ein verschließbaren Ablassstutzen (47) vorgesehen ist, der in das Tragegehäuse (30) unbeabsichtigt ausgetretenes Wasser auslässt.

8. Gerät nach einem der vorstehenden Ansprüche, **dadurch gekennzeichnet, dass** zum Tragen des Geräts (50) durch eine Person (49) ein Tragegriff (45); Laschen (70, 71), Ösen, ein oder zwei Schultergurte (73), Räder (78), und/oder ein ausziehbarer Zugrahmen (79) mit Haltegriff (80) vorgesehen ist.

9. Gerät nach einem der vorstehenden Ansprüche, **dadurch gekennzeichnet, dass** die Patrone (5) befüllbar und/oder regenerierbar konzipiert ist.

10. Gerät nach einem der vorstehenden Ansprüche, dadurch gekenntzeichnet, dass die Patrone (5) ein Gehäuse mit einer Höhe von 200 mm bis 300 mm, vorzugsweise 250 mm und einen Durchmesser von 80 mm bis 150 mm, vorzugsweise 110 mm besitzt.

## Claims

1. Device for treating heating water, having
- a pressure reservoir (1) with a ion-exchange means (6), and
- inlet and outlet connections (35, 36) provided on the pressure reservoir (1),
**characterized in that**
- the pressure reservoir (1) is, in terms of type and size, a water filter housing (2) in which, instead of a filter element, a cartridge (5) containing the ion-exchange means (6) is inserted replaceably,
- the pressure reservoir (1) is arranged removably in a portable container (25),
- the portable container is embodied as a transportation housing (30) of the type of a transportation suitcase with a bottom part (27) and a lid part (28), and
- the inlet and outlet connections (35, 36) provided on the pressure reservoir (1) are connected to respective coupling elements (24), with the coupling elements (24) being arranged in respective opposite lateral walls (38) of the transportation housing (30),
wherein the inlet and outlet connections (35, 36) are each L-shaped, and
wherein the pressure reservoir (1) has inlet and outlet ports on both sides to which the respective L-shaped inlet and outlet connections (35, 36) are fastened at an angle such that the long L-sides are oriented parallel to each other and vertically to a central axis of the filter housing (2) and their outer ends each have plug-type connections formed to interact with respective plug-type couplings (33).

2. Device according to Claim 1, **characterized in that**
- inlet and outlet lines (13, 14) with quick coupling elements (15) at their ends are provided for connection to a heating water circuit, which coupling elements can be connected via the inlet and outlet couplings (35, 36) or via interconnected inlet and outlet fittings (17, 18) with the water filter housing (2) via the coupling elements (24).

3. Device according to Claim 2, **characterized in that**
- the inlet and outlet fittings (17, 18) and the inlet and outlet lines (13, 14) are independent modular elements which can be carried along and whose ends are provided with additional coupling elements (23, 15).

4. Device according to Claim 3, **characterized in that**
- the bottom part (27) has a bottom wall (31) and an intermediate bottom (32) parallel thereto,
- in the intermediate bottom (32), the plug-type couplings (33) are provided spaced according to the space between the ends of the inlet and outlet cpuplings (35, 36), which plug-type couplings (33) are connected to the coupling elements (24) in the lateral walls (38) via connecting lines (37) guided in the space between bottom wall (31) and intermediate bottom (32), and **in that**
- the pressure reservoir (1) can be mounted onto the intermediate bottom (32) such that in the carrying or active position with closed transportation housing (30), it is in a hanging position.

5. Device according to Claim 4, **characterized in that**
- the coupling elements (24) are provided in the region of a lower support side (42) of the transportation housing (30) so that in the upright position for usage of the device, the connected inlet and outlet fittings (17, 18) are located near the bottom or a supporting surface, and **in that**
- on the intermediate bottom (32), quick-coupling elements such as spring-type clamps (43) are provided which removably receive the inlet and outlet fittings (17, 18), preferably to the left and to the right of the inserted pressure reservoir (1).

6. Device according to one of the preceding Claims 7 through 9, **characterized in that**
- on the side of the transportation housing (30) which is the upper side in the upright position for usage of the device, a hanging device (44), such as a bracket (44), hook or band with Velcro® strip or the like is provided which removably fastens the inlet and outlet lines (13, 14) in the rolled-up or folded state.

7. Device according to one of the preceding Claims, **characterized in that**
- on the side of the transportation housing (30) which is the lower side (42) in the upright position for usage of the device, an outlet, in particular a closable outlet connection (47), is provided which drains water which unintentionally has penetrated into the transportation housing (30).

8. Device according to one of the preceding Claims, **characterized in that** for carrying of the device (50) by one person (49), a carrying handle (45), brackets (70, 71), lugs, one or two shoulder belts (73), wheels (78) and/or an extendable pulling frame (79) with supporting handle (80) are provided.

9. Device according to one of the preceding Claims, **characterized in that** the cartridge (5) is designed to be able to be filled and/or regenerated.

10. Device according to one of the preceding Claims, **characterized in that** the cartridge (5) has a housing with a height of 200 mm to 300 mm, preferably 250 mm, and a diameter of 80 mm to 150 mm, preferably 110 mm.

## Revendications

1. Appareil destiné au traitement d'eau de chauffage, comprenant
- un réservoir sous pression (1) avec agent échangeur d'ions (6), et
- des tubulures d'alimentation et d'écoulement (35, 36) prévues sur le réservoir sous pression (1),
**caractérisé**
- **en ce que** le réservoir sous pression (1) est dans sa nature et sa grandeur un boîtier de filtre à eau (2), dans lequel une cartouche (5) contenant l'agent échangeur d'ions (6) est insérée de façon amovible au lieu d'un élément filtrant,
- le réservoir sous pression (1) est disposé de façon amovible dans un récipient (25) portable,
- **en ce que** le récipient portable est conçu comme boîtier de transport (30) sous forme d'une mallette portable avec partie de fond (27) et partie de couvercle (28), et
- **en ce que** les tubulures d'alimentation et d'écoulement (35, 36) prévues sur le réservoir sous pression (1) sont reliées à des éléments d'accouplement (24) respectifs, les éléments d'accouplement (24) étant disposés dans des parois latérales (38) respectives opposées du boîtier de transport (30),
les tubulures d'alimentation et d'écoulement (35, 36) étant à chaque fois en forme de L, et
le réservoir sous pression (1) présentant des deux côtés des ouvertures d'alimentation et d'écoulement, sur lesquelles les tubulures d'alimentation et d'écoulement (35, 36) respectives sont fixées de façon coudée, de sorte que les longues branches en L sont orientées parallèlement entre elles et perpendiculairement à un axe médian du boîtier de filtre (2) et dont les extrémités extérieures présentent à chaque fois des branchements à enfichage, qui sont conçus pour interagir avec des accouplements à enfichage (33) respectifs.

2. Appareil selon la revendication 1, **caractérisé**
- **en ce que** des conduites d'alimentation et d'évacuation (13, 14) dotées d'éléments d'accouplement rapide (15) sont prévues sur les extrémités pour le raccordement à un circuit d'eau de chauffage, qui peuvent être reliées par les tubulures d'alimentation et d'écoulement (35, 36) ou par des accessoires d'alimentation et d'écoulement (17, 18) intercalés au boîtier de filtre à eau (2) au moyen des éléments d'accouplement (24).

3. Appareil selon la revendication 2, **caractérisé**
- **en ce que** les accessoires d'alimentation et d'écoulement (17, 18) et les conduites d'alimentation et d'évacuation (13, 14) sont des éléments de module autonomes et pouvant être emportés, qui sont dotés sur leurs extrémités d'autres éléments d'accouplement (23, 15).

4. Appareil selon la revendication 3, **caractérisé**
- **en ce que** la partie de fond (27) a une paroi de fond (31) et un fond intermédiaire (32) parallèle à cette paroi ;
- **en ce que**, dans le fond intermédiaire (32), les accouplements à enfichage (33) sont prévus espacés en fonction de la distance entre les extrémités des tubulures d'alimentation et d'écoulement (35, 36), lesquels accouplements sont reliés par des conduites de liaison (37) guidées dans l'espace intermédiaire entre la paroi de fond (31) et le fond intermédiaire (32) aux éléments d'accouplement (24) dans les parois latérales (38), et
- **en ce que** le réservoir sous pression (1) peut être emboîté sur le fond intermédiaire (32), de telle sorte qu'il se trouve en position de transport ou en position active, lorsque le boîtier de transport (30) est fermé, dans une position suspendue.

5. Appareil selon la revendication 4, **caractérisé**
- **en ce que** les éléments d'accouplement (24) sont prévus dans la zone d'un côté vertical (42) inférieur du boîtier de transport (30), de sorte que, lorsque l'appareil se trouve dans la position d'utilisation verticale, des accessoires d'alimentation et d'écoulement (17, 18) raccordés se trouvent à proximité du fond ou sur un support vertical, et
- **en ce que** des éléments de fixation rapide tels que des colliers à ressort (43) sont prévus sur le fond intermédiaire (32), lesquels colliers maintiennent les accessoires d'alimentation et d'écoulement (17, 18) de façon amovible, de préférence à gauche et à droite à côté du réservoir sous pression (1) utilisé.

6. Appareil selon l'une des revendications précédentes 7 à 9, **caractérisé**
- **en ce qu'**un dispositif d'accrochage (44), tel que patte (44), crochet ou bande à fermeture Velcro ou similaire, est prévu sur le côté, supérieur dans la position d'utilisation verticale de l'appareil, du boîtier de transport (30), laquelle suspension fixe de façon amovible les conduites d'alimentation et d'évacuation (13, 14) dans l'état enroulé ou replié.

7. Appareil selon l'une des revendications précédentes, **caractérisé**
- **en ce qu'**une évacuation, en particulier une tubulure d'écoulement (47) pouvant être fermée, est prévue sur le côté (42), inférieur dans la position d'utilisation verticale de l'appareil, du boîtier de transport (30), laquelle tubulure fait sortir l'eau sortie involontairement dans le boîtier de transport (30).

8. Appareil selon l'une des revendications précédentes, **caractérisé en ce que**, pour le transport de l'appareil (50) par une personne (49), il est prévu une poignée de transport (45), des pattes (70, 71), des anneaux, une ou deux sangles d'épaule (73), des roues (78) et/ou un cadre de traction (79) extensible avec poignée de maintien (80).

9. Appareil selon l'une des revendications précédentes, **caractérisé en ce que** la cartouche (5) est conçue de façon à pouvoir être remplie ou régénérée.

10. Appareil selon l'une des revendications précédentes, **caractérisé en ce que** la cartouche (5) présente un boîtier d'une hauteur de 200 mm à 300 mm, de préférence 250 mm et un diamètre de 80 mm à 150 mm, de préférence 110 mm.
